(19) Europäisches Patentamt
European Patent Office
Office européen des brevets

(11) **EP 3 869 977 B1**

(12) **EUROPEAN PATENT SPECIFICATION**

(45) Date of publication and mention
of the grant of the patent:
**20.04.2022 Bulletin 2022/16**

(21) Application number: **19784082.0**

(22) Date of filing: **15.10.2019**

(51) International Patent Classification (IPC):
*A23L 27/26* (2016.01)     *A23L 27/10* (2016.01)
*A23L 33/145* (2016.01)     *A23L 23/00* (2016.01)

(52) Cooperative Patent Classification (CPC):
(C-Sets available)
**A23L 27/10; A23L 23/00; A23L 33/145;**
A23V 2200/00                           (Cont.)

(86) International application number:
**PCT/EP2019/077850**

(87) International publication number:
**WO 2020/083699 (30.04.2020 Gazette 2020/18)**

(54) **PROCESS FOR THE PREPARATION OF A FLAVOURING**

VERFAHREN ZUR HERSTELLUNG EINES AROMASTOFFES

PROCÉDÉ DE PRÉPARATION D'UN ARÔME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.10.2018 EP 18202703**

(43) Date of publication of application:
**01.09.2021 Bulletin 2021/35**

(73) Proprietor: **Unilever IP Holdings B.V.
3013 AL Rotterdam (NL)**

(72) Inventors:
• **BATENBURG, Amir, Maximiliaan
3133 AT Vlaardingen (NL)**
• **VAN HOEK, Jacoba, Carolina
3133 AT Vlaardingen (NL)**

• **KOEK, Jean, Hypolites
3133 AT Vlaardingen (NL)**

(74) Representative: **van den Brom, Coenraad Richard
Unilever N.V.
Unilever Patent Group
Bronland 14
6708 WH Wageningen (NL)**

(56) References cited:
**EP-A1- 1 142 493        EP-A1- 2 103 225
EP-B1- 1 142 493        WO-A1-2016/185233
JP-A- 2003 169 627        JP-A- 2007 259 744**

(52) Cooperative Patent Classification (CPC): (Cont.)

C-Sets
A23V 2200/00

**Description**

**Field of the invention**

The present invention relates to a process for the production of a flavouring, a flavouring obtainable by said process and a food product comprising said flavouring.

**Background of the invention**

Many consumer food products, such as soups, ready meals, bouillon cubes contain flavourings to ensure the product meets the consumer's flavour expectations. Particular attention has been paid to providing meat flavourings for such food products.

Typically, meat flavourings are of synthetic origin, prepared via Maillard and Strecker reactions involving sulphur-containing amino acids and sugars. The sulphur-containing amino acids can be provided by free amino acids for example cysteine, or sulphur amino acid containing peptides, such as glutathione. Sugars used are typically glucose, ribose, arabinose or xylose. Mottram et al., J.Braz. Chem.Soc. 9, 261 (1998) describe combining cysteine and pure inositol monophosphate (IMP, a ribonucleotide) by heating for 1 h at 140 °C under a pressure of 0.28 MPa (2.7 bar), at pH 3.0, 4.5 and 6. A disadvantage of such chemical synthesis is that the resultant savoury flavour cannot be described as 'natural' according to EFFA guidelines. Consumers increasingly desire food products that are labelled as only containing natural ingredients. Consequently, there is a need to provide a process for the preparation of natural savoury flavouring.

JP2007-259744, example 1, discloses a process for making a seasoning having a good beef flavor in which 25 weight part 5'-nucleotide yeast extract (the product made from a Biospringer, yeast extract, 36% 5'-nucleotide content), 10 weight part glutathione containing yeast extract (the product made from a Kojin, yeast extract Aromild U-15, 15% glutathione content) and 0.2 weight part ascorbic acid was mixed with 64.8 weight part of water. The mixture was heated for 40 minutes at 105 °C in a pressurization reactor.

JP 2003-169627, example 1, discloses a process for making a meat flavouring in which 7 parts by weight of 5'-nucleotide-containing yeast extract (manufactured by Kohjin, 5'-nucleotide content 36%), glutathione-containing yeast extract (Yeast Extract Aromild U, glutathione content 8%), 2.5 parts by weight of xylose, 7 parts by weight of powdered dextrin (manufactured by Sanwa Starch Co., Ltd., Sandech # 70) and 14.5 parts by weight of sodium chloride were added to 50 parts by weight of water and heated at 105 °C. for 65 minutes. After completion of the reaction, the reaction solution was dried with a spray drier to obtain a seasoning. A disadvantage of the process of JP 2003-169627 is that pure xylose and dextrin are added, which are derived by chemical means and so the resultant flavouring does not qualify as natural.

A further drawback of the heat mediated, Maillard based seasonings of JP 2003-169627 is an undesirable steamed smell or burnt smell. JP 2016-174587 aims at overcoming this disadvantage by including a proline source. Example 5 discloses a composition comprising 49.0 wt.% glutathione yeast extract, 4.0 wt.% 5'-ribonucleotide-containing yeast extract, 1.4 wt.% fructoglucose syrup, 5.0 wt.% proline -containing yeast extract and 40.6 wt.% water, which composition was heated at 110 °C for 30 minutes.

There remains a need to provide a process for the preparation of meaty flavourings which meets the consumer and regulatory needs.

**Summary of the invention**

In a first aspect, there is provided a method for the preparation of a flavouring, comprising the steps of:

   (i) providing a reaction mixture comprising:

      a. yeast extract comprising at least 0.5 wt.%, by weight of dry matter of yeast extract, glycosylamine and/or derivatives thereof at least 1.0 wt.%, by weight of dry yeast extract, thiol containing compounds.
      b. at least 2 wt.%, by weight of the reaction mixture, acid,
      c. at least 10 wt.%, by weight of the reaction mixture, water,

   (ii) heating the reaction mixture at a temperature in the range of 90-160 °C, wherein the heated reaction mixture has an acidity such that a 1 wt.% dilution in demineralised water has a pH of in the range of 3.5 and 6 at 20 °C,
   (ii) optionally drying the product,

wherein the reaction mixture is heated for a time (t) hours according to the formula (I):

$$t = 4096e^{-bT} \quad (I)$$

where: 90°C ≤ T ≤ 160°C, and 0.06 ≤ b ≤ 0.07.

The inventors of the present invention have surprisingly found that a flavouring having a meaty flavour is provided by a process in which yeast extract comprising 0.5 wt.%, glycosylamine and/or derivatives thereof and 1 wt.% thiol containing compounds, by weight of dry matter of yeast extract, is heated at a temperature in the range of 90 to 160 °C in the presence of an acid.

Surprisingly conversion of the thiol containing compounds and glycosylamine and/or derivatives thereof present in the yeast extract(s) proceeds efficiently at/above 90 °C to provide a meaty flavouring, without the formation of competing off-flavours.

The present invention has the advantage over prior art methods that chemically processed reducing sugars, such as glucose-fructose syrup, are not required in the reaction mixture, in order to provide a meaty flavour. Consequently, the process according to the present invention meets the required consumer need for natural flavourings.

**Detailed description of the invention**

The word 'comprising' as used herein is intended to mean 'including' but not necessarily 'consisting of' or composed of'. In other words, the listed steps or options need not be exhaustive.

Unless specified otherwise, numerical ranges expressed in the format 'from x to y' or 'x-y' are understood to include x and y. When for a specific feature multiple preferred ranges are described in the format 'from x to y' or 'x-y', it is understood that all ranges combining the different endpoints are also contemplated. For the purpose of the invention ambient temperature is defined as a temperature of about 20°C.

Unless indicated otherwise, weight percentages (wt.%) are based on the total weight of the composition.

The term "yeast" as used herein, means an organism belonging to the *Saccharomycetaceae* family, preferably to the genus *Saccharomyces.* Yeast in the context of the present invention may be any kind of yeast.

The term "yeast extract" as used herein refers to a composition comprising water soluble components of the yeast cell, the composition of which is primarily amino-acids, peptides, carbohydrates and salts. Yeast extract is produced through the hydrolysis of peptide bonds by the naturally occurring enzymes present in edible yeast and/or or by the addition of food-grade enzymes (Food Chemical Codex), i.e. by autolysis or hydrolysis. A yeast extract, which in the context of the present invention is synonymous with yeast hydrolysate or yeast autolysate, i.e. a soluble extract from yeast comprising hydrolysed protein.

The term "glycosylamine and/or derivatives thereof" refers to a glycosyl group covalently attached to an amino group. A glycosyl group is formed by removing the hydroxy group from the hemiacetal function of a monosaccharide, for example ribose or glucose. The amino group may, for example, be provided by a purine, pyrimidine or pyridine groups. Derivatives may comprise phosphorylated hydroxy groups as in 5'-ribonucleotides.

The term "ribonucleotide" as used herein refers to a mixture of guanosine monophosphate (5'-GMP), cytidine monophosphate (5-CMP), uridine monophosphate (5'-UMP) and further adenosine monophosphate (5'-AMP) and/or inosine monophosphate (5'-IMP), wherein the 5 -IMP in the mixture is obtained by partial or complete conversion of 5'-AMP into 5'-IMP. The term "ribonucleotides" is herein intended to refer to either the free 5'-ribonucleotides or salts thereof. The weight percentage of 5'-ribonucleotides in the yeast extract (wt.%) is based on the weight of the salt free dry matter of the composition and is calculated as disodium salt heptahydrate (2Na.7Aq) of 5'-ribonucelotide. Salt free does not mean that the composition of the invention cannot contain salt, but means that salt is excluded from the composition for the calculation of wt.%." Ribonucleotide and nucleotide are used interchangeably within the scope of the present application.

The term "ribonucleoside" as used herein refers to a mixture of guanosine, cytidine monophosphate, uridine, adenosine and/or inosine.

The amount of ribonucleotide and/or ribonucleoside present in the reaction mixture can be determined by $^1$H NMR.

The yeast extract according to the invention comprises on the one hand "total dry matter" and on the other hand "water". The sum of the weight of the total dry matter and water is 100% by definition. For instance, a yeast extract may comprise 15 wt.% water and 85% total dry matter.

The "total dry matter" in the yeast extract comprises on the one hand "yeast dry matter" or "salt-free dry matter", on the other hand "non-yeast dry matter" such as (added) salt. The "yeast dry matter" or "salt-free dry matter" in the yeast extract may comprise amino acids, peptides, lipids, polysaccharides, 5'-ribonucleotides etc..

A yeast extract may therefore have the following composition:

60% water;

40% total dry matter of which 8% salt (sodium chloride) = 20 wt.% of the total dry matter;

32% yeast dry matter of which = 80% of the total dry matter;

6% 5'-ribonucleotides = 18.75% of the yeast dry matter (6/32);

26% others such as amino acids, peptides, lipids, polysaccharides.

The term "acid" as used herein refers to a compound that is a Bronsted acid.

The term "thiol containing compounds" as used herein means a compound having -SH groups, such as cysteine, as well as masked -SH compounds such as disulphide containing compounds (-S-S-), such as cystine. The total amount of -SH can be determined according to the method in Proteins and Proteomics by Richard J. Simpson. CSHL Press, Cold Spring Harbor, NY, USA, 2003.

According to the present invention, the reaction mixture comprises yeast extract, an acid, and water. Preferably, the reaction mixture comprises, by weight of the reaction mixture, at least 30 wt.% yeast extract, preferably at least 40 wt.% yeast extract, more preferably at least 50 wt.% yeast extract, even more preferably at least 60 wt.%, yet more preferably at least 70 wt.% yeast extract, most preferably at least 80 wt.%. In other words, the reaction mixture comprises yeast extract in the range of 30 to 80 wt.%, by weight of the reaction mixture, preferably the reaction mixture comprises yeast extract in the range of 40 to 75, wt.%, more preferably the reaction mixture comprises yeast extract in the range of 45 to 65, wt.%, by weight of the reaction mixture.

The yeast extract may belong to the family *Saccharomycetaceae.* In one particular embodiment, the yeast is a *Saccharomyces,* e.g. *Saccharomyces cerevisiae* or *Saccharomyces uvarum.* In another embodiment, the yeast is a *Kluyveromyces.,* e.g. Kluyveromyces *fragilis.* In yet another embodiment, the yeast is Candida, e.g. *Candida* utilis, also known as Torula yeast.

The reaction mixture as defined herein comprises at least 0.5 wt.%, by weight of dry matter of yeast extract, glycosylamine and/or derivatives thereof and at least 1 wt.% thiol containing compounds, by weight of dry matter of yeast extract. The glycosylamine and/or derivatives thereof and thiol containing compounds may be provided by the same or different yeast extracts. In other words, the glycosylamine and/or derivatives thereof and thiol containing compounds may be provided by a first yeast extract and a second yeast extract, respectively, wherein in certain embodiments the first and second yeast extract can be the same.

In a preferred embodiment, step i) comprises providing a first yeast extract comprising at least 0.5 wt.%, by weight of dry matter of yeast extract, glycosylamine and/or derivatives thereof and a second yeast extract comprising at least 1 wt.% thiol containing compounds, by weight of dry matter of yeast extract.

In another preferred embodiment, step i) comprises providing a yeast extract that comprises at least 0.5 wt.%, by weight of dry matter of yeast extract, glycosylamine and/or derivatives thereof, heating the yeast extract in the presence of acid, and subsequently adding a yeast extract comprising at least 1 wt.% thiol containing compounds, by weight of dry matter of yeast extract. The resultant reaction mixture is then heated in the presence of acid at a temperature of in the range of 90 to 160 °C.

Preferably, the yeast extract added in step i) comprises at least 1 wt.%, preferably at least 2 wt.%, preferably at least 5 wt.%, more preferably at least 10 wt.%, even more preferably at least 15 wt.%, most preferably at least 20 wt.%, by weight of dry matter of yeast extract, glycosylamine and/or derivates thereof.

Typically, the reaction mixture includes yeast extract comprising glycosylamine and/or derivates thereof, in the range of 20-75 wt.%, more preferably in the range of 30-60 wt.%, even more preferably in the range of 40-50 wt.%, by weight of the reaction mixture.

The reaction mixture typically includes yeast extract comprising thiol containing compounds, in the range of 20-75 wt.%, more preferably in the range of 30-60 wt.%, even more preferably in the range of 40-50 wt.%, by weight of the reaction mixture.

Preferably, the reaction mixture includes yeast extract comprising glycosylamine and/or derivatives thereof and thiol containing compounds, in the range of 20-75 wt.%, more preferably in the range of 30-60wt.%, even more preferably in the range of 40-50 wt.%, by weight of the reaction mixture.

In a preferred embodiment, the glycosylamine and/or derivatives thereof contains a ribose moiety. It has been found that processes according to the invention in which ribose containing glycosylamines are used, compounds such as 2-methyl-3-furanthiol, 2 methyl-3-(methylthio)furan and bis-(2-methyl-3-furyl) disulphide are formed, which furan containing compounds give a characteristic meaty aroma.

In certain embodiments, the glycosylamine and/or derivative thereof is a ribonucleotide and/or ribonucleoside. Preferably the yeast extract comprises at least 0.5 wt.%, preferably at least 1 wt.%, preferably at least 5 wt.%, more preferably at least 10 wt.%, even more preferably at least 15 wt.%, most preferably at least 20 wt.%, by weight of dry matter of yeast extract, ribonucleotide.

In another preferred embodiment, the glycosylamine is a ribonucleotide and/or ribonucleoside. Without wishing to be bound by theory, the inventors postulate that heating the ribonucleotide in the presence of acid leads to the ribonucleotide and/or ribonucleotide degrading to release ribose which can take part in reactions with the thiol containing compounds present to generate the flavouring compounds.

The thiol containing compounds may be proteins, peptides or amino acids which comprise -SH groups. In other words, thiol groups may be present as "free amino acids" or as part of peptides and/or proteins. Preferably, the thiol containing compounds are peptides comprising glutathione or cysteine, preferably glutathione.

In a preferred embodiment, the yeast extract comprises at least 2 wt.%, preferably at least 5 wt.%, preferably at least 10 wt.%, more preferably at least 15 wt.%, even more preferably at least 20 wt.%, most preferably at least 25 wt.%, by weight of dry matter of yeast extract, thiol containing compounds.

The reaction mixture as defined herein comprises an acid. Preferably the acid is a mineral acid or an organic acid, preferably an organic acid. Preferably, the organic acid is selected from the group consisting of acetic acid, ascorbic, lactic acid, malic acid, citric acid, succinic acid, tartaric acid, oxalic acid, tartronic acid, glycolic acid, glyceric acid, succinic acid, fumaric acid; sugar acids like: gluconic acid, glucuronic acid, glucaric acid, mannuronic acid, aromatic acids like benzoic acid, para-hydroxybenzoic acid, catechuic acid, gallic acid, ferulic acid, quinic acid and mixtures thereof. The organic acid is, preferably selected from the group consisting of ascorbic, lactic acid, malic acid and citric acid, succinic acid, tartaric acid, more preferably, the organic acid is selected from the group consisting of lactic acid, malic acid and citric acid, tartaric acid, and combinations thereof, most preferably the organic acid is lactic acid

Preferably, the reaction mixture comprises at least 5 wt.% acid, based on the total weight of the reaction mixture, more preferably at least 10 wt.%, based on the total weight of the reaction mixture.

In a preferred embodiment, step i) comprises the step of adding an acid to the yeast extract. Preferably, the amount of acid added is the range of 0.1-2 parts by weight acid is added to 1-10 parts by weight yeast extract comprising at least 0.5 wt.%, by weight of dry matter of yeast extract, glycosylamine and/or derivatives thereof.

The reaction mixture as defined herein comprises at least 10 wt.%, by weight of the reaction mixture, water. Preferably, the reaction mixture comprises at least 20 wt.% water, preferably at least 30 wt.% water, even more preferably at least 40 wt.% water.

Typically, the reaction mixture has an acidity such that a 1 wt.% dilution in demineralised water has a pH in the range of 2.0 and 7.0, preferably in the range of 3.0 to 6.5, even more preferably in the range 4.0-5.5.

As defined herein, the process comprises at least 10 wt.%, by weight of the reaction mixture, water. The water is provided by the yeast extract or added separately.

Preferably, the reaction mixture comprises at least 15 wt.%, even more preferably at least 20 wt.%, most preferably at least 25 wt.% of the reaction mixture. The water may be provided by the yeast extract or added separately.

In another preferred embodiment, the heated reaction mixture has an acidity such that a 1 wt.% dilution in demineralised water has a pH in the range of 3.5 and 6.0, preferably in the range of 4.0 to 5.5, even more preferably in the range 4.0-5.0. It has been found that when the pH is above 6, off-flavours dominate the aroma.

In a preferred embodiment, the reaction mixture comprises:

a. 20-75 wt.% yeast extract comprising at least 1 wt.%, by weight of dry matter of yeast extract, glycosylamine and/or derivatives thereof and at least 2 wt.%, by weight of dry matter of yeast extract thiol containing compounds,
b. 2-20 wt.%, by weight of the reaction mixture, of acid,
c. 10-80 wt.%, by weight of the reaction mixture, of water.

In some preferred embodiments, the process is carried out in the presence of fat or oils. In case fat is used, the fat is preferably a vegetable fat, such as e.g. palm oil stearin, but also fats from animals such as pork, chicken, and/or beef are within the scope of the present invention. The fat preferably comprises triglycerides. Fat is also intended to mean oil, such as e.g. olive oil or palm oil.

In a preferred embodiment, the method according to the present invention does not comprise a step of separately adding a reducing sugar. By 'separately' is meant in addition to the yeast extract. A reducing sugar is a saccharide that comprises a hemiacetal or hemiketal group. Examples of reducing sugars are fructose, glucose, ribose, xylose, maltodextrin, dextrin, glucose syrup.

Preferably, the reaction mixture is heated for a time (t) hours according to the formula (I):

$$t = 4096e^{-bT} \text{ (I)}$$

where: $90°C \leq T \leq 160°C$, and $0.06 \leq b \leq 0.07$.

The reaction mixture is preferably heated at a temperature in the range of 90 to 160 °C for a time in the range of 0.05 to 20 hours, preferably in the range of 0.1 to 15 hours, more preferably 0.2 to 12 hours, even more preferably in the range of 0.5 to 10 hours, most preferably in the range of 1 to 8 hours.

In a preferred embodiment, the reaction mixture is heated for at least 7.5 hours at 90 °C, preferably at least 11 hours at 90 °C and preferably at most 18 hours at 90 °C.

In a preferred embodiment, the reaction mixture is heated for at least 3.5 hours at 100 °C, preferably at least 6 hours at 100 °C, and preferably at most 11 hours at 100 °C.

In a preferred embodiment, the reaction mixture is heated for at least 0.75 hours at 120 °C, preferably at least 1.5 hours at 120 °C, and preferably at most 3.5 hours at 120 °C.

In a preferred embodiment, the reaction mixture is heated for at least 0.15 hours at 140 °C, preferably at least 0.25 hours at 140 °C, and preferably at most 0.9 hours at 140 °C.

In a preferred embodiment, the reaction mixture is heated for at least 0.04 hours at 160 °C, preferably at least 0.06 hours at 160 °C, and preferably at most 0.2 hours at 160 °C.

The reaction mixture is heated at a pressure sufficient to reach the desired temperature using methods known to the skilled person. In some embodiments when the reaction mixture is heated above 100 °C, the reaction mixture is, preferably heated in a vessel contacting an oil bath, in an autoclave, in a pressure cooker or in a continuous high temperature process. In some preferred embodiment, the reaction mixture is heated at a pressure up to 4 bar. Typically, the reaction mixture is heated at 120 °C at 2 bar and a preferably the reaction mixture is heated at 140 °C at 3.6 bar.

Optionally, following the heating step, a drying step c), is carried out by vacuum drying, spray drying or belt drying the resultant reaction mixture, optionally in the presence of a drying additive, preferably wherein the drying additive is a fat component, a starch component and / or a salt. Advantageously, the flavouring composition obtained after drying can be easily stored, transported and used in the preparation of food products.

Typically, the vacuum dyring is carried out at pressures down to 10 mBar and at temperatures up to 80 °C.

In a second aspect, the present invention relates to a flavouring obtainable by a method as defined herein, wherein the pH of a 1% solution of the flavouring in demineralized water at 20 °C is in the range of 3.5 to 6, preferably in the range of 4 to 5.

Preferably, the meaty aroma / flavour can be determined by sensory evaluation of an aqueous solution containing 0.01-0.5 wt.%, by weight of dry mass, of the flavouring obtainable by the method defined herein, preferably 0.02-0.2 wt.%, by weight of dry mass of the flavouring obtainable by the method defined herein.

In a third aspect, the present invention relates to a flavouring composition comprises of yeast extract comprising, based on dry yeast extract:

    i. at least 20 mg/g, of ribonucleotides,
    ii. at least 20 mg/g, of organic acids,
    iii. at least 0.1 mg/g of glutathione,
    iv. preferably at least 1 mg/g of pyroglutamate,
    v. preferably at least 1 mg/g of cyclo-cysteinyl-glycine
    vi. and wherein the composition is preferably free from thiamine and sulfurol.

Preferably, a 1wt.% solution of said composition has a pH in the range of 3.5 to 6 at 20 °C.

In a fourth aspect, the present invention relates to a method of preparing a savoury food product comprising combining 0.001-1wt.% of a flavouring composition prepared according to the process defined herein, with one or more food ingredients.

In a fifth aspect, the present invention relates to the use of a composition comprises of yeast extract comprising, based on dry yeast extract:

    i. at least 20 mg/g, of ribonucleotides,
    ii. at least 20 mg/g, of organic acids,
    iii. at least 0.1 mg/g of glutathione,
    iv. preferably at least 1 mg/g of pyroglutamate,
    v. preferably at least 1 mg/g of cyclo-cysteinyl-glycine
    vi. and wherein the composition is preferably substantially free from thiamine and sulfurol,

to provide a meaty aroma to savoury food products.

In the context of the present application "substantially free from thiamine" means less than 1 mg/g, preferably less than 0.1 mg/g, preferably less than 0.01 mg/g.

In the context of the present application "substantially free from sulforol means less than 0.1 mg/g and substantially free from sulfurol, preferably less than 0.01 mg/g.

Preferably, a flavouring obtainable by a method as defined herein comprises compounds such as 2-methyl-3-furanthiol, 2 methyl-3-(methylthio)furan and bis-(2-methyl-3-furyl) disulphide.

Savoury food products as used herein refer to food products such as soups, sauces, bouillons, bouillon cubes, meal kits, dressings and marinades.

The present invention will now be illustrated with the following non-limiting examples.

**Examples**

**Materials & methods**

Ingredients used:

Nuc-YEP: Yeast Extract Powder 12% ribonucleotides, 18% salt ex Biospringer.
Yeast Extract Maxarome pasty ex DSM was used indicated as Nuc-YE paste.
GSH-YEP: Yeast Extract Powder 4% glutathione, < 1% salt ex Biospringer.
Lactic acid 80% (Corbion, NL),
HCl (Merck, DE)
Ascorbic acid (BASF, DE)
Malic acid (BASF, DE)

Measurements NMR quantification

qNMR analysis using targeted profiling (Chenomx) was performed according to SOP 890 V1 (Quantitative NMR in food systems). 1D 1H NMR spectra were recorded with a NOESYGPPR1D pulse sequence on a Bruker Avance III 600 NMR spectrometer, equipped with a 5-mm cryo probe. The probe was tuned to detect 1H resonances at 600.25 MHz. The internal probe temperature was set to 298 K. 64 scans were collected in 57k data points with a relaxation delay of 10 seconds, an acquisition time of 4 seconds and a mixing time of 100 ms. Low power water suppression (16 Hz) was applied for 0.99 seconds. The data were processed in TOPSPIN version 3.5 pl 1 (Bruker BioSpin GmbH, Rheinstetten, Germany). An exponential window function was applied to the free induction decay (FID) with a line-broadening factor of 0.15 Hz prior to the Fourier transformation. Manual phase correction and baseline correction was applied to all spectra. The spectra were references against the methyl signal of TSP ($\delta$ 0.0 ppm).

The 1D 1H NMR spectra were imported in Chenomx software (Chenomx NMR suite Professional v8.13, Edmonton, Alberta, Canada). The relevant Chenomx models were fitted into the NMR signal of the target compounds, minimising the residual line. The in-house (Matlab based) reporting module calculates the compound concentration in the sample in three different units, i.e. %w/w, mg/g and mg.

**pH**

A solution of 1% of the reaction mixture was prepared in 5 g/L salt water and pH was measured at 20 °C using a pH meter.

**SPME-GC/MS method**

All GC-MS analyses were done by using an Agilent 6890 GC in combination with a 5973 MSD system equipped with a Gerstel Multipurpose Sampler (MPS2). Solid Phase Micro Extraction (SPME), with a Polydimethylsiloxane absorbent fiber coating (PDMS), is used to extract the aroma compounds from the samples. The column is a DB-WAX (20m$\times$180$\mu$m$\times$0.3$\mu$m) of J&W Scientific.

Detailed conditions:
The GC MS SPME method which is used to analyse the volatiles. The fiber is a PDMS 100 $\mu$m SPME fiber

OVEN: Initial temp : 35 °C (On) Maximum temp : 250 °C;Initial time : 4.00 min Equilibration time : 0.10 min Ramps : # Rate 1 Final temp / Final time 5.00°C/min 230°C 7.00 min. Run time: 50.00 min; FRONT INLET (CIS3): Mode : Splitless; Initial temp : 250 °C (Off) ; Pressure : 132.4 kPa (On); Purge flow : 50.0 mL/min; Purge time : 1.00 min; Total flow : 53.2 mL/min; Gas saver: Off Gas type : Helium.

COLUMN: Capillary Column; Model Number: J&W 121-7023 DB-WAX;
Max temperature : 250 'C Nominal length : 20.0 m; Nominal diameter: 180.00 um Nominal film thickness : 0.30 um; Mode : constant flow; Initial flow : 1.0 mL/min Nominal initial pressure : 132.5 kPa; Average velocity : 44 cm/sec; Inlet: Front Inlet Outlet pressure : vacuum.

THERMAL AUX 2: Use : MSD Transfer Line Heater; Description : MS-Transfer; Initial temp : 250 °C (On); GERSTEL CIS Temperature : 250 °C; GERSTEL MPS SPME Injection.

SAMPLE PREPARATION: Incubation Temperature : 60 °C; Incubation Time : 1.00 min; Agitator Speed : 500 rpm; Agitator On Time : 10 s; Agitator Off Time : 1 s.

SAMPLE PARAMETERS: Vial Penetration : 22.00 mm:Extraction Time : 30.00 min
Inj. Penetration : 54.00 mm: Desorption Time : 600 s; CYCLE SETTINGS: Cycle Time : 65.0 min.

MS ACQUISITION PARAMETERS: Solvent Delay : 3.00 min; EM Offset: 0

Resulting EM Voltage : 1100; [Scan Parameters] Low Mass : 29.0; High Mass : 250.0 Threshold : 0; [MSZones]MS Quad : 150 °C maximum 200 °C.

**Sensory**

From the 1% solution of the reaction mixture in 5 g salt / L water dilutions were prepared with the salt water to a level of 0.2 g/L, 0.1 g/L, 0.05 g/L and / or other dilutions as indicated in the experiments. A panel of three persons tasted the solutions and assessed the intensity of meatiness and if relevant off flavours. In example 2 also assessed in the presence of MSG (1 g/L). The results were recorded as follows:

+++ = strong meat flavour; ++ = meat flavour; + = weak meat flavour; - = no meat flavour

**Example 1**

10g Nuc-YEP, 1 g lactic acid (80%) and 10 g of water were mixed and heated at 100°C 1 hr. Subsequently 1 g GSH-YEP was added, mixed in and heating 100 °C continued. Samples of 2 g were taken at 1hr, 2hr, 3.5hr, 5hr and 7hr (remainder). Stored at -18 °C 1% solutions were made to measure pH, to assess meat flavour further dilutions were made. Sample was prepared with concentration of 0.1 wt.%,

Table 1.1 Results reaction with time of Example 1.

| Sample | pH | 0.100 wt.% |
|--------|------|------------|
| 1 hr | 4.95 | - |
| 7 hr | 4.8 | + |

**Example 2**

Same procedure as Example 1, 7 hours heating a 100 °C only.

Table 2.1 Formulations used

| Sample | Nucl YEP 12% | GSH-YEP-8% | Lactic acid (80%) | Water |
|--------|--------------|------------|-------------------|-------|
| 2.1 | 15 g | 1.5 g | 1.5 g | 15 g |
| 2.2 | 15 g | 7.5 g | 1.5 g | 15 g |

Table 2.2: Results NMR analysis of mixture before and after heating

| Compound (mg/g) | 2.1 before | 2.1 after | 2-2 Before | 2.2 after |
|-----------------|------------|-----------|------------|-----------|
| CMP | 12.35 | 11.34 | 10.73 | 10.00 |
| Glutathione | 0.27 | <0.01 | 0.96 | 0.26 |
| GMP | 16.44 | 15.48 | 15.15 | 13.40 |
| IMP | 16.37 | 15.55 | 14.76 | 13.29 |
| UMP | 15.55 | 15.64 | 14.35 | 13.85 |

Sensory evaluation on meat taste and aroma of the composition obtained in examples 2.1 and 2.2 were carried out in the following samples:

A = 0.1 wt.% composition in water.
B = 0.1 wt.% composition in 5 g NaCl/L.
C = 0.1 wt.% composition in 5 g NaCl/L + 1g MSG /L.

Table 2.3: Sensory results of Example 2.

| Sample | A | B | C |
|--------|-----|-----|-----|
| 2.1 | + | + | + |
| 2.2 | ++ | ++ | ++ |

Measurements clearly demonstrated a relation between initial glutathione concentration and the strength of the flavour obtained. The meat flavour is detected in the presence of other food ingredients.

## Example 3

Same procedure as in Example 2 and formulation 2.2. was used.

After 7 hours reaction at 100°C a sample was taken for tasting (sample 3.1). The rest of the reaction mix was dried in a vacuum oven for 30 minutes at 60°C followed by 30 minutes at 80°C. The powder was ground in a mortar (3.2) and half of the powder was stored at -20°C and the other half at room temperature.

Table 3.1 Sensory results of Example 3.

| Sample | TASTE 0.1% in 5 g salt/L |
|--------|--------------------------|
| 3.1 (paste) | ++ |
| 3.2 (powder) | +++ |

During the drying the meat flavour remains. Removal of water to give a powder provides a stronger flavour (more flavour components per gram of product).

## Example 4

The ratio of GSH-YEP : Nuc-YEP : Lactic acid was varied at constant concentration (50%). The reaction conditions were the same as in Example 2 i.e. 7 hr heating at 100°C.

Table 4.1 Formulations and results of the reaction mixtures prepared with different ratios of the ingredients.

| Sample | GSH_YEP | Nuc_YEP | Lactic acid | water | Taste 0.20% | Taste 0.10% | Taste 0.05% | pH |
|--------|---------|---------|-------------|-------|-------------|-------------|-------------|------|
| 4.01 (invention) | 6.6 | 7.6 | 0.7 | 15.0 | +++ | ++ | + | 5.92 |
| 4.05 (invention) | 9.0 | 4.5 | 1.5 | 15.0 | +++ | ++ | + | 5.04 |
| 4.08 (invention) | 5.8 | 6.7 | 2.5 | 15.0 | +++ | ++ | + | 4.32 |
| 4.11 (comparative) | 10.0 | 5.0 | 0.0 | 15.0 | - | - | - | 6.7 |

In the absence of lactic acid (4.11) no perceivable meat flavour was detected.

## Example 5

For example 5 the ratio's found to be optimal in Example 4.01 and 4.05 were used while the amount of water was varied between 75% of water added to 200% of water added as given below in Table 5.1. Conditions were similar as in Example 2, i.e. 7 hr at 100°C. Tasting was corrected for the amount of water added in the experiments to concentration all at 0.033 w/w based on dry materials.

Table 5.1 Formulations and results of Example 5.

| Sample | GSH_YEP | Nuc_YEP | Lact.ac. | Water | pH | Tasting results (0.033% dry mass) | relative intensities (Stdv) |
|---|---|---|---|---|---|---|---|
| 5.01 | 8.2 | 8.2 | 0.8 | 12.9 | 5.83 | ++ | 30.3 (17.4) |
| 5.02 | 7.1 | 7.1 | 0.7 | 15.0 | 5.94 | ++ | 44.9 (13.8) |
| 5.03 | 10.3 | 5.1 | 1.7 | 12.9 | 4.95 | + | 40.8 (25.2) |
| 5.04 | 9.0 | 4.5 | 1.5 | 15.0 | 5.00 | +++ | 100 (47.4) |
| 5.05 | 7.2 | 3.6 | 1.2 | 18.0 | 5.14 | +++ | 83.7 (80.5) |
| 5.06 | 6.0 | 3.0 | 1.0 | 20.0 | 5.29 | +++ | 50.0 (40.1) |

Yeast extract at 40-50wt.%, by weight of the total reaction mixture and a ratio of 2 : 1 GSH-YE to Nuc-YE gave the best tasting results (5.04, 5.05, 5.06).

**Example 6**

6.1. Amounts of 1g Nuc-YEP, 1 g GSH-YX, 0.1 g Lactic acid, and 0.25 g of water mixed and heated at 120°C for 1hr, allowed to cool giving a brown pasty-solid with some sulphur smell. A 1% solution was slightly turbid, yellowish and smelled cooked meat.
6.2. As 6.1 but now with prereaction Nuc-YEP. 1g Nuc-YEP, 0.1 g Lactic acid and 0.25 g of water mixed and heated at 120°C 15', Subsequently 1 g GSH-YE was added and heating 120 C continued for 1hr, allowed to cool. The mixture was sticky-paste brown with some sulphur smell

6.3 As 6.2 but now also 0.1 g Palmfat (Saturated 49%, monounsat 37%, polyunsat. 9%) flakes were added together with the GSH_YEP

| Sample | pH | Tasting results |
|---|---|---|
| 6.1. | 5.18 | 0.1 wt.% +++, 0.05 wt.% ++, 0.025 wt.% + |
| 6.2. | 5.42 | 0.1 wt.% +++, 0.05 wt.% ++, 0.025 wt.% + |
| 6.3. | 5.35 | 0.1 wt.% +++, 0.05 wt.% ++, 0.025 wt.% + |

Example 6.1 shows that reaction at 120°C for 1 hr gives a similar tasting composition to reaction at 100°C for 7 hr. Addition of palmfat allows formation of meat flavour and did not influence the sensory properties of the reaction mixture.
Reaction at 120°C for 1 hr is similar to reaction at 100°C for 7 hr. Prereaction of Nuc-YEP did not make a difference for the sensory, although a different pH value was obtained. Addition of palmfat allows formation of meat flavour and did not influence the sensory properties of the reaction mixture.

**Example 7**

Small amounts were mixed and heated in Hungate tubes, tightly closed with butyl rubber septum, in an oil bath at 120°C for 1.5 hr, poured on Petri dish to cool and evaporated in vacuo at 80°C to dryness. The residues were ground and milled using pestle and mortar.(hot to avoid water take up) to powder and stored under nitrogen in glass vial.
7.1. 3 g Biospringer GSH-YEP + 1.5 g Nuc-YEP + 0.5 g lactic acid 80% + 5 g water - mix 7.2. 5 g Biospringer GSH-YEP + 0.7 g lactic acid 80% + 5 g water - mix

Table 7.1. pH and Sensory results of reaction mixtures of Example 7.

| Sample | pH | Tasting results |
|---|---|---|
| 7.1. | 4.64 | 0.05% +++ |
| 7.2. | 4.54 | 0.05% - |

The lack of meat flavour in sample 7.2 shows that both glycosylamine and thiol compounds are needed to provide the desired flavour.

### Example 8

Example 5 of JP2016-174587 was carried out as a comparative example. The following mixtures were heated for 30 minutes at 110 °C according JP2016-174587.

Table8 .1 Formulations and results

| Sample | GSH-YE | Nuc-YE | Lactic Ac. | Proline | FruGlu* | Water | Sensory 0.1% | Sensory 0.2% |
|---|---|---|---|---|---|---|---|---|
| 8.1 | 49 | 4 | 0 | 0.5 | 1.4 | 45.1 | - | - |
| 8.2 | 49 | 4% | 0 | 0 | 0 | 47% | - | - |
| 8.3 | 3 | 15% | 0 | 0 | 0 | 55% | - | - |
| 8.4 | 49 | 4 | 4 | 0 | 0 | 43% | + | + |
| 8.5 | 30 | 15% | 5 | 0 | 0 | 50% | ++ | +++ |
| *FruGlu - fructose/glucose obtained by mixing glucose and fructose 1 : 1 as a 50% solution in water. | | | | | | | | |

Samples 8.1, 8.2 and 8.3 had dominant umami flavour. Samples 9.4 and 9.5 both had a meaty flavour.

### Example 9

Compositions with other acids and no acid heated for 7 hours at 100 °C (all powders dissolved within 1 hour) 30% GSH-YE (Biospringer), 15% Nuc-YE (Biospringer), 5% Acid, 50% water as in example 5.06. Tasting was carried out on 0.1% and 0.2% samples in 5 g NaCl/L, n = 3.

Table 9.1

| Sample | Acid | pH 1% in salt water | Sensory 0.1% All | Sensory 0.2% |
|---|---|---|---|---|
| 9.1 | Lactic | 4.92 | ++ | +++ |
| 9.2 | Ascorbic | 5.60 | ++ | +++ |
| 9.3 | Malic | 4.57 | ++ | ++ |
| 9.4 | Hydrochloric (6 M) | 5.56 | ++ | ++ |

### Example 10

The following mixtures were heated for the specified time and at the temperature using a stainless steel tube tightly sealed with a screw lined steel cap, immersed in an oil batch

Table 10.1

| Sample | GSH-YE (g) | Nuc-YE (g) | Lactic Ac. (g) | Water (g) | Time (min.) | Temp °C | Sensory 0.1% | Sensory 0.2% |
|---|---|---|---|---|---|---|---|---|
| 10.1 | 12 | 6 | 2 | 20 | 15 | 140 | + | ++ |
| 10.2 | 12 | 6 | 2 | 20 | 6.5 | 150 | + | ++ |
| 10.3 | 12 | 6 | 2 | 20 | 3.45 | 160 | + | ++ |

### Comparative Example A

Example 1 of JP 2007 259744 A was carried out. 25 weight part 5'-nucleotide yeast extract (The product made from a Biospringer, yeast extract, 36% 5'-nucleotide content), 10 weight part glutathione containing yeast extract (The product made from a Kojin, yeast extract Aromild U-15, 15% glutathione content), 0.2 weight part ascorbic acid was mixed with 64.8 weight part of water The mixture was heated for 40 minutes at 105 °C in a pressurization reactor. The product was allowed to cool before tasting and the results shown in Table 11.

**Comparative Example B**

Example 1 of JP 2003 169627 A was carried out. 7 weight part 5'-nucleotide yeast extract (The product made from a Biospringer, yeast extract, 36% 5'-nucleotide content),19 weight part glutathione containing yeast extract (The product made from a Kojin, yeast extract Aromild U-15, 15% glutathione content), with 65 weight part of water. The mixture was heated for 65 minutes at 105 °C in closed tube (pressurized) and subsequently allowed to cool before tasting (Table 11).

**Comparative Example C**

Example 5 of EP 2 103 225 A1 was carried out. The reaction contains a nucleotide (but not a yeast extract comprising a nucleotide), which is reacted with an acid (HCl) and heated. Then the cysteine containing yeast extract is added, pH adjusted to 4.5 and heated for 5 hours at 95 °C. The total heating time is 22 hours.

Exp 5:

(1) 1.8 g IMP, 2.6 g H2O, 0.4 g conc HCl (4 mmol) 10hr, 95C
(2) Add 7.5 g GSH-YE 4% BS + 0.6 g glucose + 11.7 g H2O
(3) pH 4.5 with conc. NaOH, sub sample to NMR for % intact nucleotide (Claim 1a)
(4) Heat 5 hr 95C
(5) pH 7.5 with conc. NaOH
(6) Heat 7 hr 95C

Tasting:
A solution of 0.2 g of A, B and C and 0.5 g salt was made in warm water and tasted. This was compared by 3 persons (n = 3) with a 0.2 g of a mixture prepared according the invention as in example 7.1 and 0.5 g salt in 100 ml warm water.

| Sample | Meat / Chicken taste (0.2% in 5 g NaCl/L) | Sulfury, offtaste (0.2% in 5 g NaCl/L) | Roasted taste | pH* |
|---|---|---|---|---|
| 7.1 | +++ | - | - | 4.64 |
| A | +- | ++ | nd | 6.1 |
| B | +- | ++ | nd | 6.4 |
| C | - | nd | + | 7.1 |
| *1 wt.% dilution in demineralised water at 20 °C | | | | |

**Claims**

1. Method for the preparation of a flavouring, comprising the steps of:

(i) providing a reaction mixture comprising:

a. yeast extract comprising at least 0.5 wt.%, by weight of dry matter of yeast extract, glycosylamine and/or derivatives thereof and at least 1.0 wt.%, by weight of dry yeast extract, thiol containing compounds,
b. at least 2 wt.%, by weight of the reaction mixture, mineral acid or organic acid,
c. at least 10 wt.%, by weight of the reaction mixture, water,

(ii) heating the reaction mixture at a temperature in the range of 90-160 °C, wherein the heated reaction mixture has an acidity such that a 1 wt.% dilution in demineralised water has a pH in the range of 3.5 and 6 at 20 °C,
(iii) optionally drying the product,
wherein the reaction mixture is heated for a time (t) hours according to the formula: $t = 4096e^{-bT}$ where: $90°C \leq T \leq 160°C$, and $0.06 \leq b \leq 0.07$ (formula I).

2. Method according to claim 1, wherein step i) comprises providing a first yeast extract comprising at least 0.5 wt.%, by weight of dry matter of the first yeast extract, glycosylamine and/or derivatives thereof and a second yeast extract comprising 1 wt.% thiol containing compounds, by weight of dry matter of the second yeast extract.

3. Method according to claim 1, wherein step i) comprises providing a yeast extract that comprises at least 1.0 wt.%, by weight of dry matter of yeast extract, glycosylamine and/or derivatives thereof and at least 1 wt.% thiol containing compounds, by weight of dry matter of yeast extract.

4. Method according to any of the preceding claims, wherein the glycosylamine and/or derivatives thereof contains a ribose moiety, preferably wherein the glycosylamine and/or derivatives thereof is a ribonucleotide and/or ribonucleoside.

5. Method according to any of the preceding claims, wherein the thiol containing compounds are glutathione or cysteine, preferably glutathione.

6. Method according to any of the preceding claims, wherein the reaction mixture comprises at least 2 wt.% of an organic acid, preferably an organic acid selected from the group consisting of lactic acid, malic acid and citric acid, tartaric acid..

7. Method according to any of the preceding claims, wherein the reaction mixture comprises at least 5 wt.% of mineral acid or organic acid, based on the total weight of the reaction mixture.

8. Method according to any of the preceding claims, wherein the reaction mixture comprises at least 20 wt.%, by weight of the reaction mixture, water, preferably at least 30 wt.% water, even more preferably at least 40 wt.% water.

9. Method according to any of the preceding claims, wherein the reaction mixture in step ii) has an acidity such that a 1 wt.% dilution in demineralised water has a pH in the range of 4 to 5.

10. Method according to any of the preceding claims, wherein the reaction mixture is heated at a temperature in the range of 90 to 160 °C for a time in the range of 0.05 to 20 hours, preferably in the range of 0.1 to 15 hours, more preferably 0.2 to 12 hours, even more preferably in the range of 0.5 to 10 hours, most preferably in the range of 1 to 8 hours.

11. Method according to any of the preceding claims, wherein step c) is carried out by vacuum drying, spray drying or belt drying optionally in the presence of a drying additive, preferably wherein the drying additive is a fat component, a starch component or a salt.

12. Natural flavouring composition obtainable by a method according to any one or more of claims 1-11.

13. Natural flavouring composition according to claim 12 comprising yeast extract comprising:

    i. at least 20 mg/g of ribonucleotides,
    ii. at least 20 mg/g of organic acids,
    iii. at least 0.1 mg/g of glutathione (sum of reduced and oxidized)
    iv. preferably at least 1 mg/g of pyroglutamate,
    v. preferably at least 1 mg/g of cyclo-cysteinyl-glycine,

and wherein a 1 wt.% solution of said composition has a pH in the range of 3.5 to 6 at 20 °C.

14. Natural flavouring composition according to claim 12 or 13, wherein the composition is free from thiamine and sulfurol.

**Patentansprüche**

1. Verfahren zur Herstellung eines Aromastoffs, umfassend die Schritte:

    (i) Bereitstellen einer Reaktionsmischung, umfassend:

        a. Hefeextrakt, umfassend mindestens 0,5 Gew.-% Glycosylamin und/oder Derivate davon, bezogen auf die Trockensubstanz des Hefeextrakts, und mindestens 1,0 Gew.-% Thiol-haltige Verbindungen, bezogen auf das Gewicht des trockenen Hefeextrakts,
b. mindestens 2 Gew.-% Mineralsäure oder organische Säure, bezogen auf das Gewicht der Reaktionsmischung,
c. mindestens 10 Gew.-% Wasser, bezogen auf das Gewicht der Reaktionsmischung,

(ii) Erhitzen der Reaktionsmischung auf eine Temperatur in dem Bereich von 90-160°C, wobei die erhitzte Reaktionsmischung eine solche Acidität aufweist, dass eine 1 gew.-%-ige Verdünnung in demineralisiertem Wasser bei 20°C einen pH-Wert in dem Bereich von 3,5 bis 6 aufweist,
(iii) gegebenenfalls Trocknen des Produkts,
wobei die Reaktionsmischung für eine Zeit (t) in Stunden gemäß der Formel erhitzt wird:
$t=4096e^{-bT}$, wobei 90°C≤T≤160°C und 0,06≤b≤0,07 (Formel I).

2. Verfahren nach Anspruch 1, wobei Schritt i) das Bereitstellen eines ersten Hefeextrakts, umfassend mindestens 0,5 Gew.-% Glycosylamin und/oder Derivate davon, bezogen auf das Gewicht der Trockensubstanz des ersten Hefeextrakts, und eines zweiten Hefeextrakts, umfassend 1 Gew.-% Thiol-haltige Verbindungen, bezogen auf das Gewicht der Trockensubstanz des zweiten Hefeextrakts, umfasst.

3. Verfahren nach Anspruch 1, wobei Schritt i) das Bereitstellen eines Hefeextrakts umfasst, der mindestens 1,0 Gew.-% Glycosylamin und/oder Derivate davon, bezogen auf das Gewicht der Trockensubstanz des Hefeextrakts, und mindestens 1 Gew.-% Thiol-haltige Verbindungen, bezogen auf das Gewicht der Trockensubstanz des Hefeextrakts, umfasst.

4. Verfahren nach irgendeinem der vorhergehenden Ansprüche, wobei das Glycosylamin und/oder Derivate davon eine Ribose-Einheit enthalten, wobei das Glycosylamin und/oder Derivate davon ein Ribonukleotid und/oder Ribonukleosid sind.

5. Verfahren nach irgendeinem der vorhergehenden Ansprüche, wobei die Thiolhaltigen Verbindungen Glutathion oder Cystein, vorzugsweise Glutathion, sind.

6. Verfahren nach irgendeinem der vorhergehenden Ansprüche, wobei die Reaktionsmischung mindestens 2 Gew.-% einer organischen Säure, vorzugsweise einer organischen Säure, ausgewählt aus der Gruppe, bestehend aus Milchsäure, Äpfelsäure, Zitronensäure und Weinsäure, umfasst.

7. Verfahren nach irgendeinem der vorhergehenden Ansprüche, wobei die Reaktionsmischung mindestens 5 Gew.-% Mineralsäure oder organische Säure, bezogen auf das Gesamtgewicht der Reaktionsmischung, umfasst.

8. Verfahren nach irgendeinem der vorhergehenden Ansprüche, wobei die Reaktionsmischung mindestens 20 Gew.-% Wasser, vorzugsweise mindestens 30 Gew.-% Wasser, sogar bevorzugter mindestens 40 Gew.-% Wasser, bezogen auf das Gewicht der Reaktionsmischung, umfasst.

9. Verfahren nach irgendeinem der vorhergehenden Ansprüche, wobei die Reaktionsmischung im Schritt ii) eine solche Acidität aufweist, dass eine 1 gew.-%-ige Verdünnung in demineralisiertem Wasser einen pH-Wert in dem Bereich von 4 bis 5 aufweist.

10. Verfahren nach irgendeinem der vorhergehenden Ansprüche, wobei die Reaktionsmischung auf eine Temperatur in dem Bereich von 90 bis 160°C eine Zeit in dem Bereich von 0,05 bis 20 Stunden, vorzugsweise in dem Bereich von 0,1 bis 15 Stunden, bevorzugter von 0,2 bis 12 Stunden, sogar bevorzugter in dem Bereich von 0,5 bis 10 Stunden, höchst bevorzugt in dem Bereich von 1 bis 8 Stunden, erhitzt wird.

11. Verfahren nach irgendeinem der vorhergehenden Ansprüche, wobei Schritt c) durch Vakuumtrocknung, Sprühtrocknung oder Bandtrocknung, gegebenenfalls in Gegenwart eines Trocknungsadditivs, durchgeführt wird, wobei das Trocknungsadditiv vorzugsweise eine Fettkomponente, eine Stärkekomponente oder ein Salz ist.

12. Natürliche Aromazusammensetzung, erhältlich durch ein Verfahren nach irgendeinem der Ansprüche 1 bis 11.

13. Natürliche Aromazusammensetzung nach Anspruch 12, umfassend Hefeextrakt, umfassend:

i. mindestens 20 mg/g Ribonukleotide,

ii. mindestens 20 mg/g organische Säuren,
iii. mindestens 0,1 mg/g Glutathion (Summe aus reduziertem und oxidiertem),
iv. vorzugsweise mindestens 1 mg/g Pyroglutamat,
v. vorzugsweise mindestens 1 mg/g Cyclo-Cycsteinyl-Glycin,
und wobei eine 1 gew.-%-ige Lösung der Zusammensetzung bei 20°C einen pH-Wert in dem Bereich von 3,5 bis 6 aufweist.

14. Natürliche Aromazusammensetzung nach Anspruch 12 oder 13, wobei die Zusammensetzung im Wesentlichen frei von Thiamin und Sulfurol ist.

**Revendications**

1. Procédé pour la préparation d'un arôme, comprenant les étapes de :

    (i) fourniture d'un mélange de réaction comprenant :

    a. un extrait de levure comprenant au moins 0,5 % en masse, en masse de matière sèche d'extrait de levure, de glycosylamine et/ou des dérivés de celle-ci et au moins 1,0 % en masse, en masse d'extrait de levure sèche, de composés contenant du thiol,
    b. au moins 2 % en masse, en masse du mélange de réaction, d'acide minéral ou acide organique,
    c. au moins 10 % en masse, en masse du mélange de réaction, d'eau,

    (ii) chauffage du mélange de réaction à une température dans l'intervalle de 90-160°C,
    dans lequel le mélange de réaction chauffé présente une acidité telle qu'une dilution à 1 % en masse dans de l'eau déminéralisée présente un pH dans l'intervalle de 3,5 à 6 à 20°C,
    (iii) séchage éventuel du produit,
    dans lequel le mélange de réaction est chauffé sur une durée (t) en heures selon la formule :
    $t=4096e^{-bT}$ où : $90°C \leq T \leq 160°C$, et $0,06 \leq b \leq 0,07$ (formule 1)

2. Procédé selon la revendication 1, dans lequel l'étape i) comprend la fourniture d'un premier extrait de levure comprenant au moins 0,5 % en masse, en masse de matière sèche du premier extrait de levure, de glycosylamine et/ou des dérivés de celle-ci et un second extrait de levure comprenant 1 % en masse de composés contenant du thiol, en masse de matière sèche du second extrait de levure.

3. Procédé selon la revendication 1, dans lequel l'étape i) comprend la fourniture d'un extrait de levure qui comprend au moins 1,0 % en masse, en masse de matière sèche d'extrait de levure, de glycosylamine et/ou des dérivés de celle-ci et au moins 1 % en masse de composés contenant du thiol, en masse de matière sèche d'extrait de levure.

4. Procédé selon l'une quelconque des revendications précédentes, dans lequel la glycosylamine et/ou des dérivés de celle-ci contient une moitié ribose, de préférence dans lequel la glycosylamine et/ou des dérivés de celle-ci est un ribonucléotide et/ou ribonucléoside.

5. Procédé selon l'une quelconque des revendications précédentes, dans lequel les composés contenant du thiol sont la glutathione ou cystéine, de préférence la glutathione.

6. Procédé selon l'une quelconque des revendications précédentes, dans lequel le mélange de réaction comprend au moins 2 % en masse d'un acide organique, de préférence un acide organique choisi dans le groupe consistant en acide lactique, acide malique et acide citrique, acide tartarique.

7. Procédé selon l'une quelconque des revendications précédentes, dans lequel le mélange de réaction comprend au moins 5 % en masse d'acide minéral ou acide organique, sur la base de la masse totale du mélange de réaction.

8. Procédé selon l'une quelconque des revendications précédentes, dans lequel le mélange de réaction comprend au moins 20 % en masse, en masse du mélange de réaction, d'eau, de préférence au moins 30 % en masse d'eau, bien mieux encore au moins 40 % en masse d'eau.

9. Procédé selon l'une quelconque des revendications précédentes, dans lequel le mélange de réaction dans l'étape ii) présente une acidité telle qu'une dilution à 1 % en masse dans de l'eau déminéralisée présente un pH dans l'intervalle de 4 à 5.

10. Procédé selon l'une quelconque des revendications précédentes, dans lequel le mélange de réaction est chauffé à une température dans l'intervalle de 90 à 160°C sur une durée dans l'intervalle de 0,05 à 20 heures, de préférence dans l'intervalle de 0,1 à 15 heures, encore mieux de 0,2 à 12 heures, bien mieux encore dans l'intervalle de 0,5 à 10 heures, particulièrement de préférence dans l'intervalle de 1 à 8 heures.

11. Procédé selon l'une quelconque des revendications précédentes, dans lequel l'étape c) est réalisée par séchage sous vide, séchage par pulvérisation ou séchage sur bande éventuellement en présence d'un additif de séchage, de préférence dans lequel l'additif de séchage est un constituant de graisse, un constituant d'amidon ou un sel.

12. Composition d'arôme naturel pouvant être obtenue par un procédé selon l'une quelconque des revendications 1-11.

13. Composition d'arôme naturel selon la revendication 12 comprenant un extrait de levure comprenant :

    i. au moins 20 mg/g de ribonucléotides,
    ii. au moins 20 mg/g d'acides organiques,
    iii. au moins 0,1 mg/g de glutathione (somme de réduite et oxydée)
    iv. de préférence au moins 1 mg/g de pyroglutamate,
    v. de préférence au moins 1 mg/g de cyclo-cystéinyl-glycine, et dans laquelle une solution à 1 % en masse de ladite composition présente un pH dans l'intervalle de 3,5 à 6 à 20°C.

14. Composition d'arôme naturel selon la revendication 12 ou 13, dans laquelle la composition est substantiellement exempte de thiamine et sulfurol.

**EP 3 869 977 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007259744 A
- JP 2003169627 A
- JP 2016174587 A
- EP 2103225 A1

**Non-patent literature cited in the description**

- **MOTTRAM et al.** *J.Braz. Chem.Soc.,* 1998, vol. 9, 261
- **RICHARD J. SIMPSON.** Proteins and Proteomics. CSHL Press, 2003